Europäisches Patentamt

European Patent Office

Office européen des brevets

(19)

(11) Veröffentlichungsnummer: **0 078 865**
**A2**

(12) # EUROPÄISCHE PATENTANMELDUNG

(21) Anmeldenummer: 81110523.8

(22) Anmeldetag: 17.12.81

(51) Int. Cl.³: **A 47 J 36/30**

(30) Priorität: 06.11.81 DE 8132509 U

(43) Veröffentlichungstag der Anmeldung:
18.05.83 Patentblatt 83/20

(84) Benannte Vertragsstaaten:
AT BE CH DE FR GB IT LI LU NL SE

(71) Anmelder: Erich Schumm GmbH
Erich-Schumm-Strasse 2-4
D-7157 Murrhardt(DE)

(72) Erfinder: Frank, Ernst
Wiesenweg 3
D-7150 Backnang(DE)

(74) Vertreter: Dreiss, Uwe, Dr. jur. Dipl.-Ing. M.Sc. et al,
Patentanwälte Dreiss, Hosenthien & Fuhlendorf
Gerokstrasse 6
D-7000 Stuttgart 1(DE)

(54) **Vorrichtung zum Erwärmen, insbesondere von Speisen mittels einem festen Brennstoff, insbesondere Trockenspiritus.**

(57) Zur raumsparenden Verpackung und Transport bei besonders geringem Gewicht wird bei einer Vorrichtung zum Erwärmen, insbesondere von Speisen mittels einem festen Brennstoff mit Aufstellfüßen und Trägerteilen (4') zum Aufstellen eines Kochgeschirrs od.dgl. und einer Auflagefläche (10) für den Brennstoff vorgeschlagen, sie als einstückigen Blechteil auszubilden, wobei die Zentralfläche (1) als Auflagefläche (10) für den Brennstoff dient und zum Aufstellen des Kochgeschirrs nach oben abwinkelbare Lappen (4) vorzusehen und weiter nach unten abwinkelbare Fußlappen (3') als Aufstellfüße, um auch ein Kochen auf brennbaren Aufstellflächen zu ermöglichen. Zur Vereinfachung des mehrfachen Gebrauchs sind dabei alle Lappen (3,4) zur Erzielung ihrer Biegbarkeit über Biegekanten (2) mit der Zentralfläche (1) einstückig verbunden.

Fig. 2

Croydon Printing Company Ltd.

- 1 -

## Beschreibung

Die Erfindung betrifft eine Vorrichtung zum Erwärmen, insbesondere von Speisen mittels einem festen Brennstoff, insbesondere Trockenspirituts mit Aufstellfüßen und Trägerteilen zum Aufstellen eines Kochgeschirrs, einer Dose od.dgl. und einer Auflagefläche für den tablettenförmigen Brennstoff.

Eine bekannte solche Vorrichtung besteht aus mehreren verzinkten Blechteilen, die gelenkig miteinander verbunden sind. Sie können zum Transport zusammengeklappt werden und zum Gebrauch können zwei Seitenteile senkrecht abgeklappt werden, wobei die unteren Teile der Seitenteile die Aufstellfüße und die gegenüberliegenden Enden die Trägerteile bilden, auf die das Kochgeschirr eine zu erwärmende Dose od.dgl. aufgestellt werden kann. Auf der Auflagefläche des mittleren Teils kann dann mit Abstand vom Boden und vom Boden des Kochgeschirrs der Brennstoff eingelegt und angezündet werden. Dieses bekannte Gerät ist auch in der zusammengeklappten Stellung noch sehr voluminös und das gesamte Gerät hat ein beachtliches Gewicht, was insbesondere bei

Schumm
4003 273

der Mitnahme bei längeren Wanderungen nachteilig ist.

Aufgabe der vorliegenden Erfindung ist es, eine Vorrichtung der eingangs genannten Art zu schaffen, die ein geringes Gewicht und ein geringes Transportvolumen bei geringem Raumbedarf aufweist.

Zur Lösung dieser Aufgabe sieht die Erfindung vor, daß die Vorrichtung als einstückiges Blechteil ausgebildet ist, dessen Zentralfläche die Auflagefläche für den festen Brennstoff abgibt und die nach oben abwinkelbare als Blechlappen ausgebildete Trägerteile aufweist, auf deren Enden das Kochgeschirr od.dgl. aufstellbar ist und daß ferner nach unten abwinkelbare Fußlappen als Aufstellfüße vorgesehen sind, wobei alle Lappen zur Erzielung Ihrer Abbiegbarkeit über Biegekanten mit dem mittleren Teil einstückig verbunden sind.

Zum Transport ist die Vorrichtung praktisch ein ebenes Blechteil, das überall leicht verstaut werden kann. Es kann auch ohne wesentlichen Raumbedarf den Packungen des Brennstoffs beigefügt werden.

Schumm
4003 273

Zum Gebrauch können mit wenigen Handgriffen die Träger und Fußlappen abgewinkelt und nach dem Gebrauch zur platzsparenden Aufbewahrung zurückgebogen werden.

Besonders formstabil können die Lappen am Außenrand der Zentralfläche angeordnet sein, zweckmäßigerweise stern- oder strahlenartig, um die Zentralfläche herum. Hierdurch kann der erforderliche Materialaufwand und damit insbesondere auch das Gewicht der Vorrichtung optimal klein gehalten werden bei gleichzeitig hoher Standfestigkeit der Vorrichtung beim Gebrauch.

Die Standfestigkeit kann noch dadurch erhöht werden, daß die Fußlappen trapezförmig ausgebildet sind, wobei die außenliegenden langen Seiten jeweils als Aufstellkante dienen und die dazu parallelen kurzen Seiten mit der Zentralfläche Biegekanten bildend verbunden sind.

Zweckmäßigerweise sind die Träger und Fußlappen symmetrisch abwechselnd am Umfang der Zentralfläche verteilt angeordnet. Bei einer bevorzugten Ausführungsform sind vier Trägerlappen und vier Fuß-

Schumm
4003 273

- 4 -

lappen vorgesehen.

Um sicherzustellen, daß die Abbiegung immer an derselben Stelle erfolgt, können die Biegekanten zweckmäßigerweise an Materialengstellen vorgesehen sein. Zur Erhöhung der Formstabilität können die Lappen durch jeweils mindestens eine Sicke versteift sein. Dadurch, daß die Sicken senkrecht zur zugeordneten Biegekante verläuft und bis nahe an diese herangeführt ist, kann die Abbiegung jeweils an derselben Stelle ebenfalls gewährleistet werden.

Für eine lange Lebensdauer kann der Blechteil besonders vorteilhaft aus verzinktem Stahlblech hergestellt sein, wobei eine Dicke von 0,5 mm für den üblichen Gebrauch ausreicht.

Eine wesentliche Erhöhung der Gebrauchsdauer kann noch dadurch erreicht werden, daß als Stahlblech ein weiches Blech mit hoher Biegewechselfestigkeit gewählt wird.

Schumm
4003 273

- 5 -

Weitere erfindungsgemäße Ausbildungen sind den
Unteransprüchen zu entnehmen und werden mit ihren
Vorteilen in der nachstehenden Beschreibung näher
erläutert. In den beigefügten Zeichnungen zeigt:

Figur 1          eine Draufsicht auf eine
                 Vorrichtung und

Figur 2          eine Schrägansicht der in Fig. 1
                 dargestellten Vorrichtung in
                 ihrer Gebrauchsstellung.

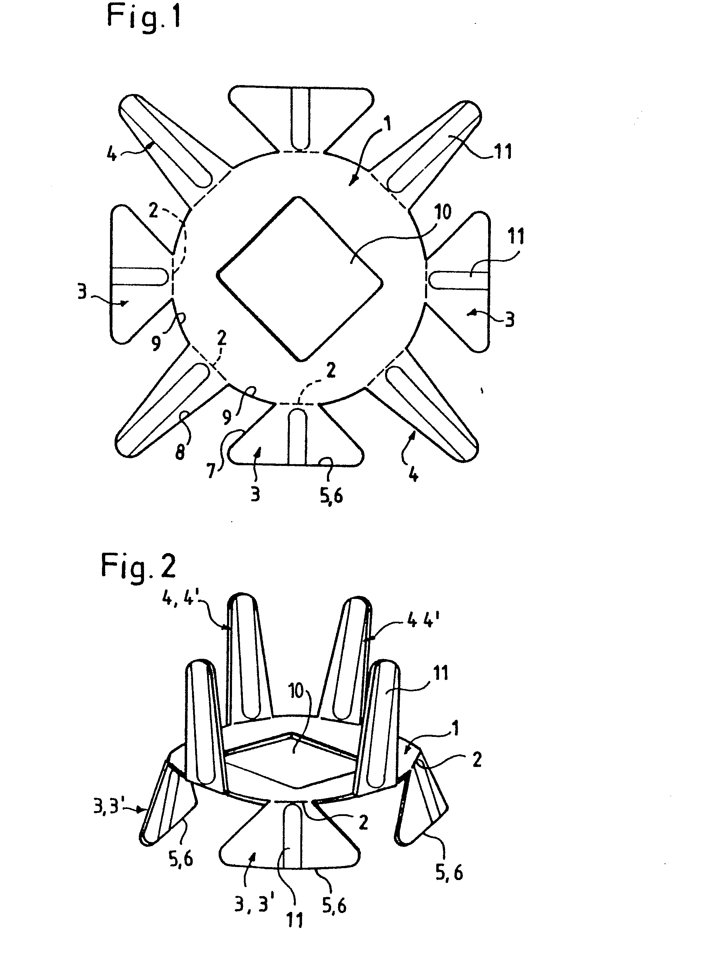

Die in Figur 1 dargestellte Vorrichtung ist ein
einstückiger Blechteil aus verzinktem Stahlblech
von etwa 0,5 mm Dicke von hoher Biegewechselfestigkeit. Er weist eine Zentralfläche 1 auf, an deren
Außenrand über Biegekanten 2 Lappen 3,4 sternförmig
angeordnet sind. Ein Teil der Lappen 3 hat Trapezform und diese dienen in Form von Fußlappen 3'
als Aufstellfüße, wobei deren längere Seiten 5
in ihrer abgewinkelten Gebrauchsstellung Aufstellkanten 6 sind zur Aufstellung der gesamten Vorrichtung
auf einer nicht dargestellten Aufstellfläche.

Schumm
4003 273

Die anderen Lappen 4 sind fingerförmige Trägerteile 4', auf deren Enden im abgewinkelten Gebrauchszustand ein Kochgeschirr od.dgl. aufgestellt
werden kann.

Im ebenen Transportzustand verlaufen die einander
zugekehrten Seiten 7 und 8 der benachbarten Lappen
3 und 4 jeweils etwa parallel zueinander. Der
an die Zentralfläche 1 anstoßende Freiraum ist
durch eine freie Kante 9 begrenzt.

Im Ausführungsbeispiel sind vier Fußlappen 3' und
vier Trägerteile 4' gleichmäßig am Umfang verteilt
vorgesehen, so daß durch die freien Kanten 9 und
die Biegekanten 2 ein gleichmäßiges Sechzehn-Eck
gebildet ist.

Zur sicheren Aufnahme des normalerweise tablettenartigen festen Brennstoffs kann die Zentralfläche 1
etwas nach unten ausgeformt eine Auflagefläche 10
für den festen Brennstoff bilden. Diese vertiefte
Auflagefläche 10 kann wie im Ausführungsbeispiel
dargestellt, quadratisch aber auch bei einfacherer
Herstellung des Werkzeugs kreisrund ausgebildet sein.

Schumm
4003 273

- 7 -

Zur Erhöhung der Biegesteifigkeit der Lappen 3
und 4 sind diese in ihrer Mitte jeweils mit
einer Sicke 11 versehen, die vom Lappenende
bis nahe an die Biegekante 2 verläuft, so daß
die Lappen 3 und 4 für den Gebrauch der Vorrichtung
leicht nach oben bzw. unten abgewinkelt werden
können,wie dies aus Figur 2 ersichtlich ist.

Schumm
4003 273

# DREISS, HOSENTHIEN & FUHLENDORF

**PATENTANWÄLTE**

Beim Europäischen Patentamt zugelassene Vertreter
European Patent Attorneys

HANS LANGOSCH
Dipl.-Ing. (1963 - 1981)
UWE DREISS
Dr jur. Dipl.-Ing., M. Sc.
HEINZ HOSENTHIEN
Dr.-Ing . Dipl.-Ing.
JÖRN FUHLENDORF
Dipl.-Ing

D-7000 STUTTGART 1
GEROKSTRASSE 6
TF (07 11) 24 57 34/44
TG IDEAPAT
TX 7-22 247 idea d

P  für Besucher

DREISS, HOSENTHIEN & FUHLENDORF, D-7000 STUTTGART 1

**Anmelder:**

Erich Schumm GmbH
Erich-Schumm-Str. 2-4

7157 Murrhardt

| Amtl. Akt. Z. Off. Ser. No. | Ihr Zeichen Your Ref. | Unser Zeichen Our Ref. | Datum Date |
|---|---|---|---|
| | | 4003 273 | 15.12.1981 |

<u>Titel</u>: Vorrichtung zum Erwärmen, insbesondere von Speisen mittels einem festen Brennstoff, insbesondere Trockenspiritus

## Patentansprüche

1. Vorrichtung zum Erwärmen, insbesondere von Speisen mittels einem festen Brennstoff, insbesondere Trockenspiritus mit Aufstellfüßen und Trägerteilen (4') zum Aufstellen eines Kochgeschirrs, einer Dose od.dgl. und einer Auflagefläche (10) für den Brennstoff, <u>dadurch gekennzeichnet</u>, daß sie als einstückiger Blechteil ausgebildet ist, dessen Zentralfläche (1) die Auflagefläche (10) für den festen Brennstoff abgibt und die nach oben abwinkelbare als Lappen (4) ausgebildete

Postscheckkonto Stuttgart 507 71 -705 (BLZ 600 100 70) · Dresdner Bank Stuttgart 1919 854 (BLZ 600 800 00)

Trägerteile (4') aufweist, auf deren Enden das
Kochgeschirr od.dgl. aufstellbar ist und das
ferner nach unten abwinkelbare Fußlappen (3')
als Aufstellfüße vorgesehen sind, wobei alle
Lappen (3,4) zur Erzielung ihrer Biegbarkeit
über Biegekanten (2) mit der Zentralfläche (1)
einstückig verbunden sind.

2. Vorrichtung nach Anspruch 1, dadurch gekennzeichnet,
daß die Lappen (3,4) am Außenrand der Zentralfläche
(1) stern- oder strahlenförmig um diese herum
angeordnet sind.

3. Vorrichtung nach einem der Ansprüche 1 oder 2,
dadurch gekennzeichnet, daß die Fußlappen (3')
trapezförmig ausgebildet sind und die jeweils
außenliegende lange Seite (5) als Aufstellkante
(6) dient und die dazu parallelen kurzen Seiten
mit der Zentralfläche (1) verbunden sind.

4. Vorrichtung nach einem der Ansprüche 2 oder 3,
dadurch gekennzeichnet, daß am Umfang der Zentralfläche (1) verteilt die Fußlappen (3') und Trägerteile (4') abwechselnd angeordnet sind, vorzugsweise
vier Trägerteile (4') und vier Fußlappen (3').

Schumm
4003 273

5. Vorrichtung nach einem der Ansprüche 1 bis 4, dadurch gekennzeichnet, daß die Biegekanten (2) an Materialengstellen vorgesehen sind.

6. Vorrichtung nach Anspruch 5, dadurch gekennzeichnet, daß die Biegekanten (2) und die freien Kanten (9) zwischen den Lappen (3,4) ein regelmäßiges Vieleck bilden.

7. Vorrichtung nach einem der Ansprüche 1 bis 6, dadurch gekennzeichnet, daß die einander zugekehrten Seiten (7,8) zweier benachbarter Lappen (3,4) im nicht abgebogenen Liefer- oder Transportzustand parallel zueinander verlaufen.

8. Vorrichtung nach einem der Ansprüche 1 bis 7, dadurch gekennzeichnet, daß die Lappen (3,4) durch jeweils mindestens eine Sicke (11) versteift sind.

9. Vorrichtung nach Anspruch 8, dadurch gekennzeichnet, daß die Sicke (11) senkrecht zur zugeordneten Biegekante (2) verläuft und bis nahe an diese herangeführt ist.

Schumm
4003 273

10. Vorrichtung nach einem der Ansprüche 1 bis 9, <u>dadurch gekennzeichnet</u>, daß die Auflagefläche (10) für den festen Brennstoff durch eine Vertiefung in der Zentralfläche (1) gebildet ist.

Schumm
4003 273

Fig.1

Fig.2